(19) **Europäisches Patentamt / European Patent Office / Office européen des brevets**

(11) **EP 4 557 638 A1**

(12) **EUROPEAN PATENT APPLICATION**
published in accordance with Art. 153(4) EPC

(43) Date of publication:
**21.05.2025 Bulletin 2025/21**

(21) Application number: **23839199.9**

(22) Date of filing: **15.02.2023**

(51) International Patent Classification (IPC):
**H04J 1/00** *(2006.01)*          **H04B 1/10** *(2006.01)*
**H04B 1/59** *(2006.01)*

(52) Cooperative Patent Classification (CPC):
**H04B 1/10; H04B 1/59; H04J 1/00**

(86) International application number:
**PCT/JP2023/005227**

(87) International publication number:
**WO 2024/014019 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112663**

(71) Applicants:
• **DENSO WAVE INCORPORATED**
Agui-cho
**Chita-gun, Aichi 470-2297 (JP)**

• **Keio University**
**Tokyo, 108-8345 (JP)**

(72) Inventors:
• **MITSUGI, Jin**
**Fujisawa-shi, Kanagawa 252-0882 (JP)**
• **SAKABE, Haruki**
**Chita-gun, Aichi 470-2297 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **WIRELESS COMMUNICATION SYSTEM**

(57)     A wireless communication system includes: a transmitter configured to transmit a carrier wave that is unmodulated; a plurality of passive terminals; and a receiver. Each of the plurality of passive terminals is configured to receive the carrier wave, superimpose a subcarrier of which frequency is determined in advance for each of the plurality of passive terminals on a backscatter of the carrier wave, modulate a signal generated by a signal source onto the subcarrier using a predetermined modulation scheme, and transmit the backscatter. The receiver is configured to receive multiple backscatters transmitted from the plurality of passive terminals, perform frequency conversion and orthogonal transformation on the multiple backscatters to generate a finite-length data series having an I component and a Q component, remove an interference component from the finite-length data series, and perform demodulation to acquire the signal of the signal source in each of the plurality of passive terminals.

**EP 4 557 638 A1**

# FIG.6

602

FINITE-LENGTH
DATA SERIES
(I, Q)

604

HPF

608

DOWN-CONVERSION
AND FILTERING

610

SUBCARRIER
DATA SERIES
(I, Q)

INTERFERING CHANNEL

INTERFERED
CHANNEL

612

HARMONIC-ORDER
ROTATION
PROCESSOR

614

CARRIER PHASE
ANGLE ESTIMATION
UNIT

616

CARRIER PHASE
ANGLE SUBTRACTION
UNIT

618

INTERFERENCE
REMOVAL
PROCESSOR

620

DEMODULATION
PROCESSOR

622

DEMODULATION
DATA SERIES

**Description**

Technical Field

The present disclosure relates to a harmonic removal scheme in a wireless communication system utilizing a plurality of wireless tags.

Background Art

As described in PTL 1, there is a method of utilizing a bandpass filter as a method for removing harmonic components in a wireless communication system. In this method, a harmonic component is removed from a received signal by calculating a carrier phase angle through performing regression analysis and the like on a subcarrier data series obtained by performing bandpass filter processing on the received signal, generating an angle data series from an analysis data series obtained from the subcarrier data series and the carrier phase angle, multiplying the angle data series by a harmonic factor, generating a replica of the harmonic component from the harmonic-multiplied angle data series and the carrier phase angle, and subtracting the replica of the harmonic component from a desired subcarrier data series.

PTL 2 discloses a reception device and a reception method that can alleviate influence of an interference signal while suppressing increases in a circuit scale and a processing time.

Citation List

Patent Literature

PTL 1: JP 2017-200180 A

PTL 2: JP 2010-16785 A

Summary of the Invention

In the method of PTL 1, the amount of calculation in harmonic removal sometimes increases. Specifically, in the method of PTL 1, a signal with a frequency higher than the baseband is sampled. As such, the sampling rate is higher than in the case of a baseband signal, which sometimes results in an increased amount of calculation.

The present disclosure provides a wireless communication system that can suppress an increase in the amount of calculation in harmonic removal.

A wireless communication system according to an embodiment of the present disclosure is a wireless communication system including:

a transmitter configured to transmit a carrier wave that is unmodulated;
a plurality of passive terminals; and
a receiver;
wherein each of the plurality of passive terminals is configured to receive the carrier wave, superimpose a subcarrier of which frequency is determined in advance for each of the plurality of passive terminals on a backscatter of the carrier wave, modulate a signal generated by a signal source onto the subcarrier using a predetermined modulation scheme, and transmit the backscatter,
the receiver is configured to receive multiple backscatters transmitted from the plurality of passive terminals, perform frequency conversion and orthogonal transformation on the multiple backscatters to generate a finite-length data series having an I component and a Q component, remove an interference component from the finite-length data series, and perform demodulation to acquire the signal of the signal source in each of the plurality of passive terminals, and
the receiver is further configured to, before the demodulation of the signal of the signal source:

down-convert the finite-length data series to a baseband and perform filtering to generate a subcarrier data series;
perform harmonic-order rotation transformation on a first subcarrier data series of an interfering channel out of the subcarrier data series to acquire a second subcarrier data series;
calculate a covariance matrix based on a third subcarrier data series of an interfered channel out of the subcarrier data series and the second subcarrier data series to estimate a carrier phase angle;
subtract the carrier phase angle from the second subcarrier data series to acquire a harmonic data series as the interference component; and
subtract the harmonic data series from the third subcarrier data series.

According to the present disclosure, it is possible to suppress an increase in the amount of calculation in harmonic removal.

Brief Description of Drawings

FIG. 1 is a schematic block diagram illustrating an overall configuration of a wireless communication system according to an embodiment of the present disclosure.
FIG. 2 is a block diagram illustrating a hardware configuration of a sensor terminal according to an embodiment of the present disclosure.
FIG. 3 is a block diagram illustrating a hardware configuration of an interrogator according to an embodiment of the present disclosure.
FIG. 4 is a block diagram of an IQ converter according to an embodiment of the present disclosure.
FIG. 5 is a block diagram illustrating a hardware configuration of a software receiver according to an embodiment of the present disclosure.
FIG. 6 is a block diagram illustrating a software function of the software receiver according to an embodiment of the present disclosure.
FIG. 7 is a diagram schematically illustrating radio waves received from sensor terminals according to an embodiment of the present disclosure.

Description of Embodiments

An outline of an embodiment of the present disclosure (hereinafter, referred to as a "present embodiment") will be described.

<Overall Configuration of Wireless Communication System 100>

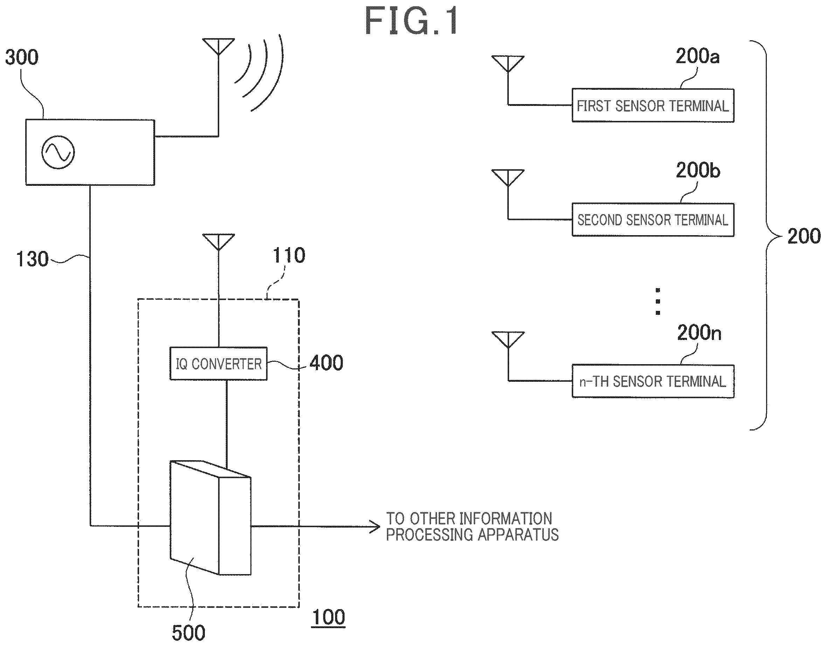

FIG. 1 is a schematic block diagram illustrating an overall configuration of a wireless communication system 100 according to the present embodiment. The wireless communication system 100 includes a receiver 110, sensor terminals 200, and an interrogator 300. A first sensor terminal 200a, a second sensor terminal 200b, $\cdots$, and an n-th sensor terminal 200n are attached to a measurement target that is a large structure such as an aircraft fuselage or a tunnel (not illustrated). Note that the first sensor terminal 200a, the second sensor terminal 200b, $\cdots$, and the n-th sensor terminal 200n are simply referred to as sensor terminals 200 when no distinction is made therebetween.
The interrogator 300 and the receiver 110 are provided in the vicinity of the sensor terminals 200. The receiver 110 includes an IQ converter 400 and a software receiver 500. The interrogator 300 is connected to the software receiver 500 through a network 130.
The sensor terminal 200 includes a wireless tag that uses a backscatter (i.e., a backscattered wave), a sensor such as an acceleration sensor, and an analog modulation circuit. The analog modulation circuit is a phase modulator in which, for example, a varicap is connected in parallel to a coil and a capacitor. In this phase modulator, phase modulation is performed on a carrier wave by applying an output voltage from the acceleration sensor to the varicap.
The interrogator 300, which is also referred to as a reader/writer, has a function to perform bidirectional wireless data communication with the sensor terminals 200 and a function to transmit an unmodulated wave.
The first sensor terminal 200a, the second sensor terminal 200b, $\cdots$, and the n-th sensor terminal 200n each perform predetermined communication with the interrogator 300 and then receive the unmodulated wave transmitted from the interrogator 300. Each sensor terminal 200 superimposes a subcarrier on the backscatter of the unmodulated wave, modulates a signal generated by the sensor onto the subcarrier, and transmits the backscatter. That is, each sensor terminal 200 reflects the unmodulated wave. The receiver 110 receives the respective radio waves transmitted from the plurality of sensor terminals 200 and perform demodulation to acquire the respective signals of the sensors by arithmetic processing.
The interrogator 300 performs bidirectional communication for assigning a unique subcarrier frequency to each of the plurality of sensor terminals 200. The interrogator 300 transmits a sensor terminal list generated as the result to the receiver 110 through the network 130. The receiver 110 analyzes received data and performs demodulation processing based on the sensor terminal list.

<Wireless Communication Procedure in Wireless Communication System 100>

The wireless communication system 100 according to the present embodiment carries out two main wireless communication procedures.

As a first procedure, prior to simultaneously receiving measurement signals from the plurality of sensor terminals 200, the interrogator 300 performs wireless data communication separately with each of the plurality of sensor terminals 200. In this wireless data communication, the interrogator 300 assigns a unique subcarrier frequency to each of the plurality of sensor terminals 200. Then, the interrogator 300 generates a sensor terminal list indicating the relationship between each of the plurality of sensor terminals 200 and its subcarrier frequency and transmits the sensor terminal list to the receiver 110.

Next, as a second procedure, the interrogator 300 transmits an unmodulated carrier wave. The plurality of sensor terminals 200 each superimpose a subcarrier modulated by a signal of the built-in acceleration sensor on the received unmodulated wave and send back the backscatter to the receiver 110. At this time, the interrogator 300 functions as a carrier wave source (i.e., a transmitter).

The receiver 110 simultaneously receives multiple backscatters from the plurality of sensor terminals 200 and converts the multiple backscatters into a finite-length data series. Since this finite-length data series includes mixed signals simultaneously received from the respective sensor terminals 200, during demodulation of a signal of a certain sensor terminal 200, signals of other sensor terminals 200 become interference components. Therefore, the software receiver 500 to be described later removes the interference components from the finite-length data series and performs demodulation processing on the target received signal.

In the present embodiment, the processing of removing an interference component from a received signal performed by the receiver 110 is hereinafter referred to as "interference removal".

<Sensor Terminal List>

The sensor terminal list indicates a modulation scheme and a subcarrier frequency that are set for each of the plurality of sensor terminals 200, and a demodulation order number that is determined based on the strength of a radio wave received by the receiver 110 and the subcarrier frequency. Specifically, the sensor terminal list includes a terminal ID field for storing a terminal identifier (ID) that uniquely identifies each of the plurality of sensor terminals 200, a modulation scheme field for storing a modulation scheme set for each of the plurality of sensor terminals 200, a subcarrier frequency field for storing a subcarrier frequency set for each of the plurality of sensor terminals 200, and a demodulation order number field for storing a demodulation order number of each of the plurality of sensor terminals 200.

Any analog modulation scheme may be set as the modulation scheme for the sensor terminals 200. Besides phase modulation (PM), frequency modulation (FM) and the like is available as analog modulation. In a case where the same modulation scheme is set for all the plurality of sensor terminals 200, the sensor terminal list includes no modulation scheme field.

<Sensor Terminal 200>

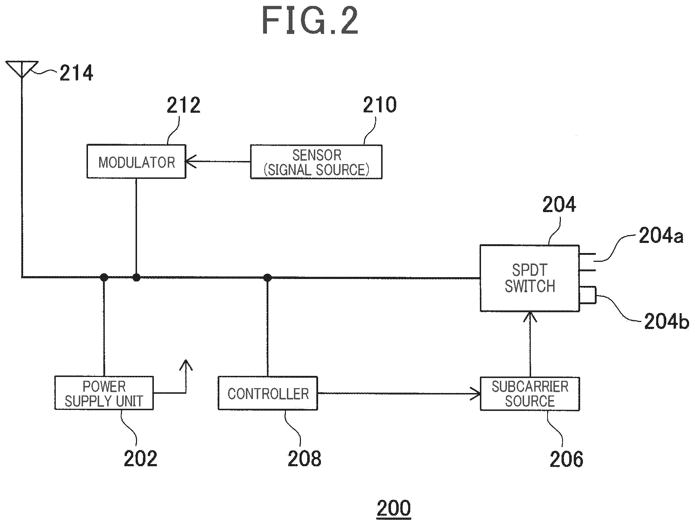

FIG. 2 is a block diagram illustrating a hardware configuration of the sensor terminal 200. The sensor terminal 200 does not have an independent power source such as a battery but instead has a power supply unit 202 that converts electric power of radio waves received by an antenna 214 into circuit driving power. That is, the sensor terminal 200 is a passive terminal. Besides the power supply unit 202, a modulator 212, a single pole double throw (SPDT) switch 204, and a controller 208 are connected to the antenna 214.

The SPDT switch 204 connects, to the antenna 214, an open-circuited end 204a or a shortcircuited end 204b in a switching manner depending on a square wave signal (i.e., a subcarrier) output by a subcarrier source 206. The SPDT switch 204 causes the impedance of the antenna 214 to vary with the period of the subcarrier. Then, the subcarrier is superimposed on a reflected wave (i.e., a backscatter) of an unmodulated wave obtained by the antenna 214. The frequency of the subcarrier generated by the subcarrier source 206 is determined by the controller 208 controlling the subcarrier source 206. The controller 208 stores a frequency specified by the interrogator 300 when communicating with the interrogator 300 in the first procedure. Then, the controller 208 controls the subcarrier source 206 so as to generate a subcarrier of the stored frequency in the second procedure.

A sensor 210 as a signal source is connected to the modulator 212. The sensor 210 is a sensor that outputs an alternate current signal, such as an acceleration sensor, for example. The modulator 212 modulates the signal of the sensor 210 onto the subcarrier by phase modulation (PM), frequency modulation (FM), or the like.

With the above configuration, the sensor terminal 200 superimposes a subcarrier on a reflected wave of an unmodulated wave transmitted from the interrogator 300 that is an unmodulated wave source (i.e., a carrier wave source). The sensor terminal 200 performs phase modulation, frequency modulation, or pulse-width modulation on the subcarrier with a signal of the sensor 210 and transmits the reflected wave with the subcarrier superimposed thereon through the antenna 214.

<Interrogator 300>

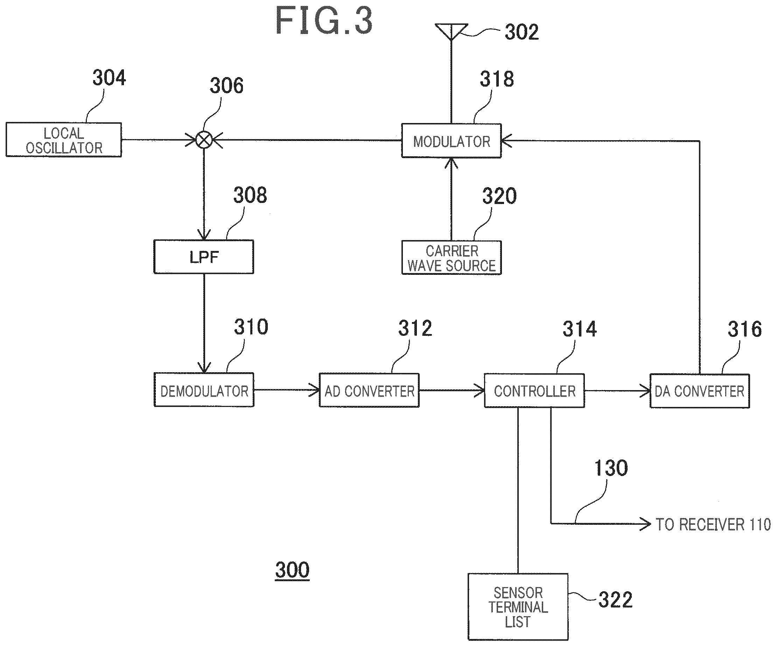

FIG. 3 is a block diagram illustrating a hardware configuration of the interrogator 300. A radio wave received by an antenna 302 is converted into a low-frequency signal using a local oscillator 304, a mixer 306, and a LPF 308. The converted signal is input to a demodulator 310 to undergo demodulation, then converted into digital data by an analog/digital (A/D) converter 312, and input to a controller 314. The controller 314 is implemented by a microcontroller, for example.

The controller 314 interprets information on a sensor terminal 200 included in the digital data to generate an instruction to the sensor terminal 200. Digital data constituting the instruction is converted into an analog signal by a D/A converter 316 and then used by a modulator 318 to modulate a carrier wave generated by a carrier wave source 320.

Through the interaction processing with the sensor terminals 200, the controller 314 recognizes all the sensor terminals 200 existing within a communication range and then assigns unique-frequency subcarriers to all the sensor terminals 200. Then, the controller 314 generates a sensor terminal list 322 listing correspondence relations between the sensor terminals 200 and the subcarrier frequencies and transmits the sensor terminal list 322 to the receiver 110 via the network 130. That is, the interrogator 300 has a function to transmit, to each of the plurality of sensor terminals 200, a control instruction for assigning a unique subcarrier to each of the plurality of sensor terminals 200.

<IQ Converter 400>

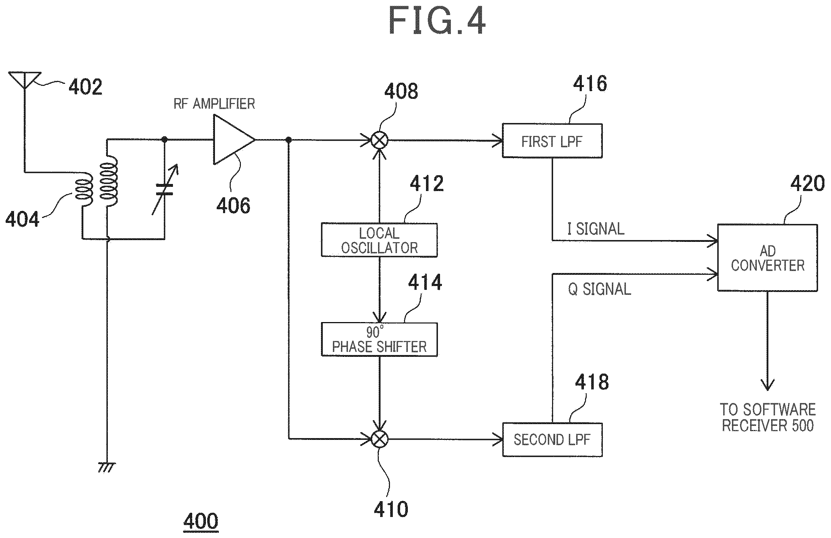

FIG. 4 is a block diagram of the IQ converter 400. In the IQ converter 400, a tuned circuit 404 extracts a signal from a radio wave received by an antenna 402, and a radio frequency (RF) amplifier 406 then amplifies the signal. The signal amplified by the RF amplifier 406 (e.g., a high-frequency signal) is input to a first mixer 408 and a second mixer 410. A local oscillator signal output from a local oscillator 412 and having a frequency slightly lower than the frequency of the radio wave is input to the first mixer 408. A local oscillator signal shifted in phase by 90° by a 90° phase shifter 414 is input to the second mixer 410.

The first mixer 408 calculates the product of the RF signal from the RF amplifier 406 and the local oscillator signal from the local oscillator 412 and supplies a frequency signal representing a frequency difference between the RF signal and the local oscillator signal to a first low-pass filter (hereinafter, an "LPF") 416. Then, the first LPF 416 outputs an I signal resulting from subtracting the frequency of the local oscillator signal output by the local oscillator 412 from the frequency of the radio wave received by the antenna 402.

Similarly, the second mixer 410 calculates the product of the RF signal from the RF amplifier 406 and the local oscillator signal shifted in phase by 90° by the 90° phase shifter 414 and supplies a frequency signal representing a frequency difference between the RF signal and the local oscillator signal to a second LPF 418. Then, the second LPF 418 outputs a Q signal resulting from subtracting the frequency of the 90° phase-shifted local oscillator signal from the frequency of the radio wave received by the antenna 402.

The local oscillator 412, the first mixer 408, the 90° phase shifter 414, the second mixer 410, the first LPF 416, and the second LPF 418 constitute a quadrature detection circuit (i.e., a quadrature mixer).

The I signal and the Q signal are converted into digital data by an A/D converter 420 and then output to the software receiver 500.

The IQ converter 400 has a function of a downconverter using the quadrature detection circuit and an A/D conversion function by the A/D converter 420.

<Hardware Configuration of Software Receiver 500>

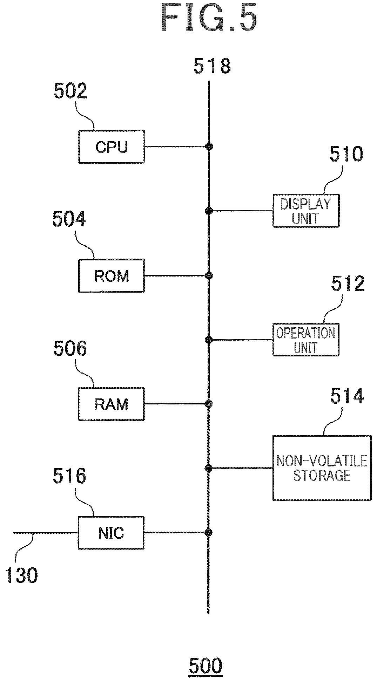

FIG. 5 is a block diagram illustrating a hardware configuration of the software receiver 500. The software receiver 500 is implemented by a computer such as a personal computer. The software receiver 500 includes a central processing unit (CPU) 502, a read only memory (ROM) 504, a random-access memory (RAM) 506, a display unit 510 such as a liquid crystal display, an operation unit 512 such as a keyboard and mouse, and a non-volatile storage 514 such as a hard disk drive, which are connected to a bus 518. In addition, a network interface card (NIC) 516 for communicating with the interrogator 300 and the IQ converter 400 is connected to the bus 518. The software receiver 500 is a general computer and realizes a function as the software receiver 500 by executing a program stored in the non-volatile storage 514.

<Software Function of Software Receiver 500>

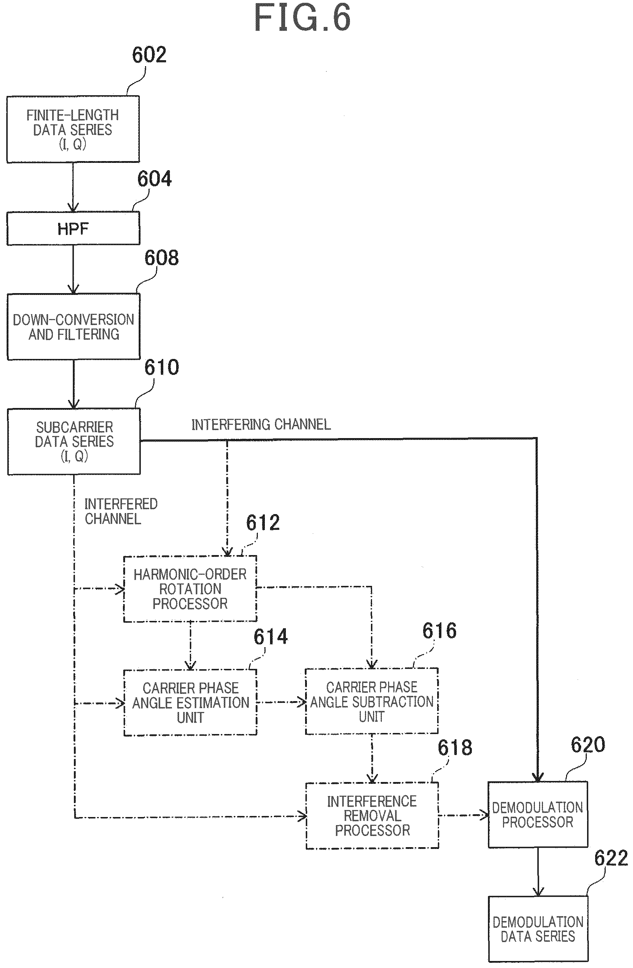

FIG. 6 is a block diagram illustrating the software function of the software receiver 500. Data constituted by I data and Q data received from the IQ converter 400 is temporarily stored in the RAM 506 (see FIG. 5) as a finite-length data series 602 to be processed. The finite-length data series 602 constituted by the I data and the Q data is first input to a high-pass filter (hereinafter, an "HPF") 604. The HPF 604 removes a direct current (DC) offset component (i.e., a DC component). The high-pass filter may be provided as needed.

Next, in a down-conversion and filtering processor 608, the finite-length data series 602 output from the HPF 604 is down-converted to the baseband and filtered, and in this way a subcarrier data series 610 of subcarrier components is extracted. As a result, carrier removal is performed on the finite-length data series 602. Note that the down-conversion to the baseband may be performed after the filtering or the filtering may be performed after the down-conversion.

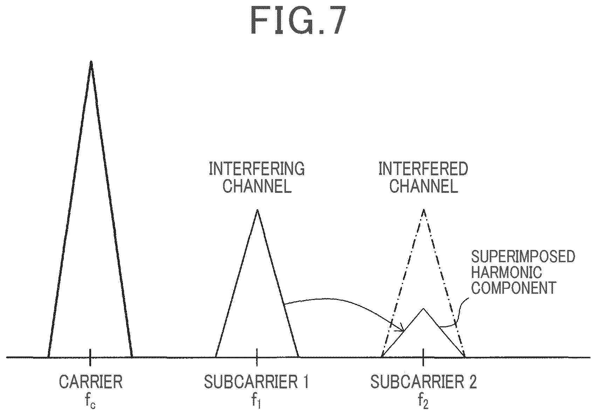

FIG. 7 is a diagram schematically illustrating radio waves received from sensor terminals 200. In practice, dozens of channels or more are provided for n sensor terminals 200. Herein, however, description is made using only two channels of a subcarrier 1 (i.e., an interfering channel) superimposed on a carrier and having a frequency $f_1$, and a subcarrier 2 (i.e., an interfered channel) superimposed on the carrier and having a frequency $f_2$ as illustrated in FIG. 7.

Here, the frequency fc of the carrier is set to 900 MHz, for example. The subcarrier 1 is assigned to the first sensor terminal 200a in FIG. 1. The frequency $f_{s1}$ of the subcarrier 1 is 100 KHz. The frequency $f_1$ of the subcarrier 1 superimposed on the carrier is fc + $f_{s1}$.

The subcarrier 2 is assigned to the second sensor terminal 200b in FIG. 1. The frequency $f_{s2}$ of the subcarrier 2 is 300 KHz. That is, $f_{s2}$ is three times the frequency $f_{s1}$ of the subcarrier 1 (i.e., 100 KHz). The frequency $f_2$ of the subcarrier 2 superimposed on the carrier is fc + $f_{s2}$. The frequency $f_{s2}$ of the subcarrier 2 can be expressed as follows:

$$f_{s2} = f_{s1} * 3$$

Here, harmonics occur at odd (3, 5, 7, 9, 11, $\cdots$) multiples of a frequency. Thus, a harmonic of the interfering channel becomes noise (i.e., an interference component) to the interfered channel.

A finite-length data series $s_1^*$, where $s_1^* = (s_{1\_1}, s_{1\_2}, s_{1\_3}, \cdots, s_{1\_n-1}, s_{1\_n})$, n = number of samples, constituted by I data and Q data of the subcarrier 1 that is the interfering channel out of the subcarrier data series 610 is input to a demodulation processor 620. Then, a demodulation data series 622 output from the demodulation processor 620 is used to acquire a subcarrier phase value θ from the first sensor terminal 200a. Each of $s_{1\_1}, s_{1\_2}, \cdots$ is constituted by I data and Q data for each sampling period obtained by sampling for the subcarrier 1.

A finite-length data series $s_3^*$, where $s_3^* = (s_{3\_1}, s_{3\_2}, s_{3\_3}, \cdots, s_{3\_n-1}, s_{3\_n})$, n = number of samples, constituted by I data and Q data of the subcarrier 2 that is the interfered channel out of the subcarrier data series 610 is input to a harmonic-order rotation processor 612, a carrier phase angle estimation unit 614, and an interference removal processor 618.

The harmonic-order rotation processor 612 performs harmonic-order rotation transformation on the subcarrier data series of the interfering channel. Specifically, the harmonic-order rotation processor 612 performs rotation transformation of a harmonic order corresponding to the subcarrier 2 that is the interfered channel (herein, three) on the subcarrier data series of the subcarrier 1 that is the interfering channel.

A value $s_\gamma$ obtained by the harmonic-order rotation transformation is expressed as follows:

$$s_\gamma = |s_1| e^{j3\angle s_1}$$

$$3\angle s_1 = 3\theta + 3\psi$$

Here, θ is a subcarrier phase angle of the subcarrier 1 and corresponds to information from the first sensor terminal 200a. ψ is a carrier phase angle of the subcarrier 1. While the carrier transmitted from the interrogator 300 is reflected by the first sensor terminal 200a and reaches the receiver 110, a phase delay of the carrier occurs depending on the length of the transmission path of the carrier. This phase delay (in other words, phase difference) is the phase difference ψ of the subcarrier 1. The phase difference ψ is a value determined by the distance between the interrogator 300 and a sensor terminal 200 and differs for each subcarrier assigned to the sensor terminals 200.

Herein, the amplitude value of the finite-length data series $s_1^*$ is $|s_1|$ and the finite-length data series $s_1^*$ has an angle component θ + ψ. $s_\gamma$ results from multiplying the angle component θ + ψ by three. For example, if the angle (θ + ψ) on the IQ plane of the finite-length data series $s_1^*$ is 60 degrees, the harmonic-order rotation transformation makes this angle 180 degrees.

The finite-length data series $s_3^*$ is expressed as follows:

$$s_3{}^* = s_3 + \beta s_\gamma e^{-j2\psi}$$

Here, $s_3$ is a component originating from the subcarrier 2 in the finite-length data series $s_3{}^*$. $\beta s_\gamma e^{-j2\psi}$ is a harmonic component superimposed on the subcarrier 2 and originating from the subcarrier 1.

The carrier phase angle estimation unit 614 estimates the carrier phase angle by calculating a covariance matrix based on the subcarrier data series of the interfered channel and the subcarrier data series resulting from the harmonic-order rotation transformation. That is, the covariance matrix is calculated based on the finite-length data series $s_3{}^*$ of the subcarrier 2 (i.e., the interfered channel) and the subcarrier data series $s_\gamma$ resulting from the harmonic-order rotation transformation. The finite-length data series $s_3{}^*$ and the subcarrier data series $s_\gamma$ resulting from the harmonic-order rotation transformation are known observable values.

$s_3{}^* = s_3 + \beta s_\gamma e^{-j2\psi}$ is substituted into $s_3{}^{*T}$
$s_3{}^{*T}$ is the transposed matrix of $s_3{}^*$
$s_3{}^* = (s_{3\_1}, s_{3\_2}, s_{3\_3}, \cdots, s_{3\_n-1}, S3\ n)$, n = number of samples

$$C = E(s_\gamma s_3{}^{*T}) = E(s_\gamma(\beta s_\gamma{}^T e^{-j2\psi T} + s_3{}^T))$$

$$= \beta E(s_\gamma s_\gamma{}^T e^{-j2\psi T}) + E(s_\gamma s_3{}^T)$$

Regarding $E(s_\gamma s_3{}^T)$, which is the second term on the right side of the above equation, $s_\gamma$ and $s_3$ are independent of each other and there is no correlation between $s_\gamma$ and $s_3$. Specifically, since $s_\gamma$ is a parameter arising from the first sensor terminal 200a and $s_3$ is a parameter arising from the second sensor terminal 200b, it can be said that there is no correlation between $s_\gamma$ and $s_3$. Thus, $E(s_\gamma s_3{}^T)$ disappears in the calculation of the covariance matrix. In other words, the carrier phase angle estimation unit 614 calculates $E(s_\gamma s_3{}^{*T})$ without using $E(s_\gamma s_3{}^T)$ that appears in the course of calculation. That is, the calculation is as follows:

$$E(s_\gamma s_3{}^{*T}) = \beta E(s_\gamma s_\gamma{}^T e^{-j2\psi T})\ (0)$$

When $s_\gamma{}^T e^{-j2\psi T}$ in $s_\gamma s_\gamma{}^T e^{-j2\psi T}$ on the right side of equation (0) is set as $s_\gamma{}'$, $s_\gamma$ and $s_\gamma{}'$ are expressed as follows:

(Equation 1)

$$s_\gamma = \begin{bmatrix} x_1 \\ y_1 \end{bmatrix} = |s_\gamma| \begin{bmatrix} \cos(3\theta + 3\psi) \\ \sin(3\theta + 3\psi) \end{bmatrix}, s_\gamma{}' = \begin{bmatrix} x_1{}' \\ y_1{}' \end{bmatrix} = |s_\gamma| \begin{bmatrix} \cos(3\theta + \psi) \\ \sin(3\theta + \psi) \end{bmatrix}$$

By substituting Math. 1 into the right side of equation (0), the matrix is also expressed as follows:

(Equation 2)

$$C = \begin{bmatrix} C_{11} & C_{12} \\ C_{21} & C_{22} \end{bmatrix}$$

$$= \gamma \begin{bmatrix} \cos(3\theta + 3\psi)\cos(3\theta + \psi) & \cos(3\theta + 3\psi)\sin(3\theta + \psi) \\ \sin(3\theta + 3\psi)\cos(3\theta + \psi) & \sin(3\theta + 3\psi)\sin(3\theta + \psi) \end{bmatrix}$$

The matrix in the lower part of Equation 2 is equal to the left side of equation (0) that has known values.

$C_{11}$: covariance of I signal
$C_{22}$: covariance of Q signal
$C_{12}$, $C_{21}$: covariance of I signal and Q signal

$C_{11} + C_{22}$ and $C_{12}$-$C_{21}$ are derived using the addition theorem.

(Equation 3)

$$C_{11} + C_{22} = \gamma \cos(2\psi)$$
$$C_{12} - C_{21} = -\gamma \sin(2\psi)$$

$$\gamma = \sqrt{(C_{11} + C_{22})^2 + (C_{12} - C_{21})^2},$$

$$\cos(-2\psi) = \frac{C_{11} + C_{22}}{\sqrt{(C_{11} + C_{22})^2 + (C_{12} - C_{21})^2}}$$

$$\sin(-2\psi) = \frac{C_{12} - C_{21}}{\sqrt{(C_{11} + C_{22})^2 + (C_{12} - C_{21})^2}}$$

$\psi$ can be obtained from Equation 3.

A carrier phase angle subtraction unit 616 in FIG. 6 calculates a harmonic replica $\gamma = e^{-j2\psi}s_{\gamma}$ based on the carrier phase angle $\psi$ obtained by the carrier phase angle estimation unit 614. That is, the carrier phase angle subtraction unit 616 obtains a harmonic data series by subtracting the carrier phase angle from the subcarrier data series resulting from the harmonic-order rotation transformation. For example, in the case of harmonic data of which subcarrier frequency is 100 KHz and of which harmonic order is three, the angle on the IQ plane of the harmonic data is (carrier phase angle of 100-KHz subcarrier) + (subcarrier phase angle of 100-KHz subcarrier * 3). In the present embodiment, after performing the harmonic-order rotation transformation on the interfering channel, rotation transformation is performed to shift back a phase angle that has been excessively rotated. Subtracting carrier phase angle $2\psi$ from the subcarrier data series resulting from the harmonic-order rotation transformation corresponds to shifting back, by $2\psi$, the phase angle of the subcarrier data series resulting from the harmonic-order rotation transformation.

The interference removal processor 618 in FIG. 6 subtracts the harmonic replica $\gamma$ from the finite-length data series $s_3^*$ to obtain $s_3$ that corresponds to the subcarrier data series resulting from removing the harmonic component superimposed on the subcarrier 2 from the subcarrier data series of the subcarrier 2. That is, the harmonic data series is subtracted from the subcarrier data series of the subcarrier 2. Subtracting the harmonic replica $\gamma = e^{-j2\psi}s_{\gamma}$ corresponds to removing an interference component of the subcarrier SC2.

The finite-length data series $S_3$ resulting from removing the superimposed harmonic component is input to the demodulation processor 620. Then, a demodulation data series 622 output from the demodulation processor 620 is used to acquire a subcarrier phase value $\theta_2$ from the second sensor terminal 200b.

In the present embodiment described above, the description is made in which the harmonic order is three and the subcarrier 2 has the frequency $f_{s2}$ of 300 Hz. However, the present embodiment is not limited thereto. For example, a subcarrier 3 is assigned to the third sensor terminal 200c. The frequency $f_{s3}$ of the subcarrier 3 is five times the frequency $f_{s1}$ of the subcarrier 1 (i.e., 100 KHz). In this case, harmonic-order rotation transformation is performed as follows.

A value $s_{\gamma2}$ obtained by the harmonic-order rotation transformation is expressed as follows:

$$s_{\gamma2} = |s_1|e^{j5\angle s1}$$

$$5\angle s_1 = 5\theta_3 + 5\psi_3$$

The carrier phase angle estimation unit 614 estimates a carrier phase angle $\psi_3$ based on a subcarrier data series $s_5^*$ of the subcarrier 3 that is an interfered channel and a subcarrier data series resulting from the harmonic-order rotation transformation. The carrier phase angle subtraction unit 616 calculates a harmonic replica $\gamma_2$ based on the subcarrier data series resulting from the harmonic-order rotation transformation and the carrier phase angle $\psi_3$. That is, the carrier phase angle subtraction unit 616 shifts back, by $4\psi$, the phase angle of the subcarrier data series resulting from the harmonic-order rotation transformation.

The interference removal processor 618 subtracts the harmonic replica $\gamma_2$ from the finite-length data series $s_5{}^*$ to obtain $s_5$ that corresponds to the subcarrier data series resulting from removing the harmonic component superimposed on the subcarrier 3 from the subcarrier data series of the subcarrier 3. That is, the interference removal processor 618 removes an interference component by subtracting the harmonic replica $\gamma = e^{-j4\psi3}s_{\gamma2}$.

Further, for example, a subcarrier 4 is assigned to the fourth sensor terminal 200d. The frequency $f_{s4}$ of the subcarrier 4 is nine times the frequency $f_{s1}$ of the subcarrier 1 (i.e., 100 KHz). In this case, a harmonic component that is nine times the subcarrier 1 and a harmonic component that is three times the subcarrier 2 are superimposed on the subcarrier 4.

In this case, the harmonic components on the subcarrier 4 are removed by sequentially performing removal of the harmonic component that is nine times the subcarrier 1 and removal of the harmonic component that is three times the subcarrier 2 on the subcarrier 4. Note that a configuration is possible in which a frequency on which multiple harmonic components are superimposed is not assigned to any sensor terminal 200 as a subcarrier.

As described above, a wireless communication system 100 according to the present embodiment includes:

> an interrogator 300 configured to transmit a carrier wave that is unmodulated;
> a plurality of sensor terminals 200; and
> a receiver 110;
> wherein each of the plurality of sensor terminals 200 is configured to receive the carrier wave, superimpose a subcarrier of which frequency is determined in advance for each of the plurality of sensor terminals 200 on a backscatter of the carrier wave, modulate a signal generated by a sensor 210 onto the subcarrier using a predetermined modulation scheme, and transmit the backscatter,
> the receiver 110 is configured to receive multiple backscatters transmitted from the plurality of sensor terminals 200, perform frequency conversion and orthogonal transformation on the multiple backscatters to generate a finite-length data series 602 having an I component and a Q component, remove an interference component from the finite-length data series 602, and perform demodulation to acquire the signal of the sensor 210 in each of the plurality of sensor terminals 200, and
> the receiver 110 is further configured to, before the demodulation of the signal of the sensor 210:
>
>> down-convert the finite-length data series 602 to a baseband and perform filtering to generate a subcarrier data series 610;
>> perform harmonic-order rotation transformation on a first subcarrier data series of an interfering channel out of the subcarrier data series 610 to acquire a second subcarrier data series;
>> calculate a covariance matrix based on a third subcarrier data series of an interfered channel out of the subcarrier data series 610 and the second subcarrier data series to estimate a carrier phase angle;
>> subtract the carrier phase angle from the second subcarrier data series to acquire a harmonic data series as the interference component; and
>> subtract the harmonic data series from the third subcarrier data series.

In other words, the wireless communication system 100 according to the present embodiment distinguishes between a carrier phase angle and a subcarrier phase angle of a signal that has undergone filtering and then down-conversion to the baseband or that has undergone down-conversion to the baseband and then filtering. Specifically, the wireless communication system 100 calculates a covariance matrix based on a baseband signal of an interfered channel and a baseband signal of an interfering channel that has undergone high-frequency-order rotation transformation, and obtains a carrier phase angle of the interfering channel by utilizing the nature of independence between an interfered channel signal and an interfering channel signal. The wireless communication system 100 subtracts the carrier phase angle corresponding to an extra rotation made by the harmonic-order rotation transformation from the baseband signal of the interfering channel that has undergone the high-frequency-order rotation transformation to generate a harmonic replica, and removes the harmonic replica from the baseband signal of the interfered channel.

This can suppress an increase in the amount of calculation in harmonic removal. Specifically, since a received signal is down-converted to the baseband to undergo the harmonic removal, the sampling rate of the received signal is reduced. As a consequence, the amount of calculation in the harmonic removal can be reduced. Furthermore, the reduction in the amount of calculation in the harmonic removal can suppress an increase in the size of a circuit for performing the harmonic removal. In other words, since a harmonic can be removed for a down-converted received signal (i.e., baseband signal processing is possible), the reduced sampling rate allows communication with more passive terminals (i.e., sensor terminals 200) while the circuit size remains the same.

In conventional techniques, it is difficult to distinguish a carrier phase angle from a subcarrier phase angle in a case where a received signal is down-converted to the baseband to undergo harmonic removal. That is, estimation of a carrier phase angle is difficult. Meanwhile, in the wireless communication system 100 according to the present embodiment, a carrier phase angle is estimated using the covariance matrix calculated based on the second subcarrier data series and the third subcarrier data series. This enables the harmonic removal with down-conversion.

Although embodiments of the present disclosure have been described above, the present disclosure is not limited to the above embodiments and may include other modifications and applications as long as they do not depart from the gist of the present disclosure. For example, in order to clearly explain the present disclosure, detailed and specific configurations of the devices and the system are described in the above embodiments. However, it is not necessary to include all the configurations described above. Further, a part of a configuration of a certain embodiment can be replaced with a configuration of another embodiment. Furthermore, a certain embodiment can also be configured by adding a configuration of another embodiment. Furthermore, with respect to a part of the configuration of each embodiment, addition, deletion, and/or substitution of another configuration can be made.

Further, part or all of the configurations, functions, processors, and the like of the above embodiments may be implemented by hardware, for example, by designing with an integrated circuit. The above configurations, functions, and the like may be implemented by programs, that is, by software for causing a processor to realize the respective functions. Information such as programs, tables, and files for realizing the functions may be stored in a volatile or non-volatile storage such as a memory, a hard disk, and a solid state drive (SSD), or in a recording medium such as an integrated circuit (IC) card and an optical disk. Furthermore, control lines and information lines that are considered necessary for the explanation are illustrated but not all control lines and information lines are illustrated. In practice, almost all the configurations may be connected with each other.

**Claims**

1. A wireless communication system comprising:

   a transmitter configured to transmit a carrier wave that is unmodulated;
   a plurality of passive terminals; and
   a receiver;
   wherein each of the plurality of passive terminals is configured to receive the carrier wave, superimpose a subcarrier of which frequency is determined in advance for each of the plurality of passive terminals on a backscatter of the carrier wave, modulate a signal generated by a signal source onto the subcarrier using a predetermined modulation scheme, and transmit the backscatter,
   the receiver is configured to receive multiple backscatters transmitted from the plurality of passive terminals, perform frequency conversion and orthogonal transformation on the multiple backscatters to generate a finite-length data series having an I component and a Q component, remove an interference component from the finite-length data series, and perform demodulation to acquire the signal of the signal source in each of the plurality of passive terminals, and
   the receiver is further configured to, before the demodulation of the signal of the signal source:

      down-convert the finite-length data series to a baseband and perform filtering to generate a subcarrier data series;
      perform harmonic-order rotation transformation on a first subcarrier data series of an interfering channel out of the subcarrier data series to acquire a second subcarrier data series;
      calculate a covariance matrix based on a third subcarrier data series of an interfered channel out of the subcarrier data series and the second subcarrier data series to estimate a carrier phase angle;
      subtract the carrier phase angle from the second subcarrier data series to acquire a harmonic data series as the interference component; and
      subtract the harmonic data series from the third subcarrier data series.

2. The wireless communication system according to claim 1,

   wherein the receiver is configured to, in calculation of the covariance matrix when estimating the carrier phase angle,
   calculate the covariance matrix based on the third subcarrier data series and the second subcarrier data series without using a covariance matrix based on a subcarrier data series of the interfered channel not including the harmonic component and the second subcarrier data series.

3. The wireless communication system according to claim 1,

wherein the receiver includes a high-pass filter, and
the receiver is configured to, before down-converting the finite-length data series to the baseband and performing the filtering to generate the subcarrier data series, use the high-pass filter to remove a direct current component from the finite-length data series.

# FIG.1

300

130

110

IQ CONVERTER — 400

TO OTHER INFORMATION
PROCESSING APPARATUS

500

100

200a
FIRST SENSOR TERMINAL

200b
SECOND SENSOR TERMINAL

200

200n
n–TH SENSOR TERMINAL

EP 4 557 638 A1

# FIG.2

200

# FIG.3

**300**

EP 4 557 638 A1

# FIG.4

EP 4 557 638 A1

# FIG.5

502 CPU

504 ROM

506 RAM

516 NIC

130

518

510 DISPLAY UNIT

512 OPERATION UNIT

514 NON-VOLATILE STORAGE

500

# FIG.6

602
┌─────────────────┐
│  FINITE-LENGTH  │
│   DATA SERIES   │
│      (I, Q)     │
└─────────────────┘
         │
         ▼        604
┌─────────────────┐
│       HPF       │
└─────────────────┘
         │
         ▼        608
┌─────────────────┐
│ DOWN-CONVERSION │
│  AND FILTERING  │
└─────────────────┘
         │
         ▼        610
┌─────────────────┐                    INTERFERING CHANNEL
│   SUBCARRIER    │
│   DATA SERIES   │
│      (I, Q)     │
└─────────────────┘
         │ INTERFERED
         │ CHANNEL
         │              612
         │    ┌──────────────────┐
         │    │  HARMONIC-ORDER   │
         └───▶│     ROTATION      │
         │    │    PROCESSOR      │
         │    └──────────────────┘
         │              │         614                616
         │              ▼                    ┌──────────────────┐
         │    ┌──────────────────┐           │  CARRIER PHASE   │
         └───▶│   CARRIER PHASE   │──────────▶│ ANGLE SUBTRACTION│
              │ ANGLE ESTIMATION  │           │       UNIT       │
              │       UNIT        │           └──────────────────┘
              └──────────────────┘                      │
                                          618           │        620
                              ┌──────────────────┐      ▼   ┌──────────────────┐
                              │   INTERFERENCE    │          │   DEMODULATION   │
         └───────────────────▶│     REMOVAL       │─────────▶│    PROCESSOR     │
                              │    PROCESSOR      │          └──────────────────┘
                              └──────────────────┘                    │
                                                                      ▼        622
                                                            ┌──────────────────┐
                                                            │   DEMODULATION   │
                                                            │   DATA SERIES    │
                                                            └──────────────────┘

# FIG.7

INTERFERING
CHANNEL

INTERFERED
CHANNEL

SUPERIMPOSED
HARMONIC
COMPONENT

CARRIER
$f_c$

SUBCARRIER 1
$f_i$

SUBCARRIER 2
$f_2$

## INTERNATIONAL SEARCH REPORT

| International application No. |
|---|
| **PCT/JP2023/005227** |

| A. | CLASSIFICATION OF SUBJECT MATTER |
|---|---|

*H04J 1/00*(2006.01)i; *H04B 1/10*(2006.01)i; *H04B 1/59*(2006.01)i
FI:    H04J1/00; H04B1/59; H04B1/10 Z

According to International Patent Classification (IPC) or to both national classification and IPC

| B. | FIELDS SEARCHED |
|---|---|

Minimum documentation searched (classification system followed by classification symbols)

H04J1/00; H04B1/10; H04B1/59

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 三次 仁、川喜田 佑介、市川 晴久, マルチキャリア・バックスキャッタ通信のシステム内・間干渉除去, 電子情報通信学会技術研究報告, 26 February 2020, vol. 119, no. 450, pp. 9-14, SRW2019-61<br>    entire text, all drawings, (MITSUGI, Jin. KAWAKITA, Yusuke. ICHIKAWA, Haruhisa. Intra and Inter System Interference Rejection in Multi-Carrier Backscatter Communications. IEICE Technical Report.) | 1-3 |
| A | 三次 仁、ラジョリア ニティシュ、川喜田 佑介、市川 晴久, パッシブ後方散乱通信における完全同期センサーデータストリーミング, 電子情報通信学会技術研究報告, 09 November 2017, vol. 117, no. 310, pp. 173-178, ASN2017-80<br>    entire text, all drawings, (MITSUGI, Jin. RAJORIA, Niitish. KAWAKITA, Yuusuke. ICHIKAWA, Haruhisa. Concurrent Sensor Data Streaming in Passive Backscatter Communications. IEICE Technical Report.) | 1-3 |
| A | RAJORIA, Nitish. IGARASHI, Yuki. MITSUGI, Jin. KAWAKITA, Yuusuke. ICHIKAWA, Haruhisa. Concurrent Backscatter Streaming from Batteryless and Wireless Sensor Tags with Multiple Subcarrier Multiple Access. IEICE Transactions on Communications. 01 December 2017, vol. E100.B, no. 12, pp. 2121-2128<br>    entire text, all drawings | 1-3 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

**Patent documents cited in the description**

- JP 2017200180 A
- JP 2010016785 A